## Europäisches Patentamt

## European Patent Office

## Office européen des brevets

(11) Veröffentlichungsnummer: **0 121 644**
A1

# EUROPÄISCHE PATENTANMELDUNG

(21) Anmeldenummer: 83890052.0

(22) Anmeldetag: 05.04.83

(51) Int. Cl.³: **H 02 G 15/013**, H 02 G 15/10

(43) Veröffentlichungstag der Anmeldung: **17.10.84** **Patentblatt 84/42**

(71) Anmelder: **Laha, Manfred, Grosse Stadtgutgasse 18, A-1020 Wien II (AT)**

(72) Erfinder: **Laha, Manfred, Grosse Stadtgutgasse 18, A-1020 Wien II (AT)**

(74) Vertreter: **Krause, Ernst, Dipl.-Ing. et al, Krause, Ernst, Dipl.-Ing. Casati, Wilhelm, Dipl.-Ing P.O. Box 234 Amerlingstrasse 8, A-1061 Wien VI (AT)**

(84) Benannte Vertragsstaaten: **AT BE CH DE FR GB IT LI LU NL SE**

(54) **Kabeleinführungseinsatz für Kabelmuffen.**

(57) Dieser Kabeleinführungseinsatz ist an seinen beiden Endteilen (1) kegelstumpfähnlich ausgebildet und in seinem Mittelteil mit einer Halterung (6), z.B. mit mindestens einer Nut und bzw. oder Rippe versehen.

Zwecks universeller Einsetzbarkeit sowie einfacher Herstellbarkeit sind die Endteile (7) des aus elastischem Kunststoff, z.B. Polyvinylchlorid, bestehenden Einsatzes (5) als kegelstumpfförmige, von der Halterung (6) ausgehende Teile mit sich, bevorzugt kontinuierlich, verjüngender Wandstärke ausgebildet. Die Innen- und bzw. oder Außenseite der Endteile (7) sind bevorzugt Mantelflächen eines geraden Kreiskegels, von denen einer länger sein kann als der andere.

# Kabeleinführungseinsatz für Kabelmuffen

Die Erfindung bezieht sich auf einen Kabeleinführungseinsatz für Kabelmuffen, der an seinen beiden Endteilen kegelstumpfähnlich ausgebildet ist und in seinem Mittelteil mit einer Halterung, z.B. mit mindestens einer Nut und bzw. oder Rippe versehen ist.

Ein bekannter Einsatz dieser Art besteht aus zwei ineinandergreifenden, spritzgießbaren Hälften aus hartem Werkstoff, die entlang einer Längsmittelebene mittels einer Nut- und Zungenverbindung miteinander verriegelbar sind. Der Mittelteil des Einsatzes weist einen mittels eines Deckels verschließbaren Einfüllstutzen für ein zunächst flüssiges, später erhärtendes Material auf. Die Endteile dieses Einsatzes sind stufenförmig abgetreppt, um durch Abschneiden dem jeweils gewünschten Kabeldurchmesser angepaßt zu werden. Die so erhaltenen Öffnungen passen natürlich nicht genau zum Umfang eines oder mehrerer Kabel, die durch den Einsatz hindurchgezogen werden sollen, sodaß eine Abdichtung mit Mastixmaterial erfolgen muß, um eine flüssigkeitsdichte Abdichtung für das erhärtbare, in den Einsatz einzugießende Material zu erhalten.

Es sind auch Kabelführungseinsätze bekannt, die neben ihrer Halterung nur einen Endteil in Konusform aufweisen, und zwar ebenfalls mit stufenförmig abgetreppter Außenseite, bei gleichbleibender Wandstärke, um sich, wiederum durch Abschneiden, unterschiedlichen Kabeldurchmessern anpassen zu können.

Die DE-OS 1 765 066 offenbart eine Kabelmuffe mit einem Einführungsstutzen aus gummielastischem Werkstoff, der am Kabel mit Vorspannung anliegt.

Die US-PS 3 678 174 beschreibt eine wärmeschrumpfbare Isolierhülse, die eine Verbindung zweier elektrischer Leiter abdeckt; ein solches Material ist jedoch für die Einsätze von Kabelmuffen nicht brauchbar.

Die Erfindung stellt sich die Aufgabe, einen Einsatz der eingangs genannten Art nicht nur universell für alle Kabeltypen einsetzbar, sondern auch in besonders einfacher

Weise herstellbar zu machen. Erfindungsgemäß erfolgt dies dadurch, daß die Endteile des in an sich bekannter Weise aus elastischem Kunststoff, z.B. Polyvinylchlorid, bestehenden Einsatzes als kegelstumpfförmige, von der Halterung ausgehende Teile mit sich, bevorzugt kontinuierlich, verjüngender Wandstärke ausgebildet sind. In dieser Weise kann der Stutzen als einteiliges Formstück leicht hergestellt werden, bevorzugt aus elastischem Kunststoff, wie Polyvinylchlorid od.dgl.

Ein besonderes Merkmal der Erfindung ist, daß einer derEndteile eine nach innen gerichtete Einstülpung aufweist; bevorzugterweise ist dabei vorgesehen, daß die Einstülpung des einen Endteiles innen durch den anderen Endteil hindurchragt. Durch diese Einstülpung erhält man eine, je nach ihrer Länge, einstellbar erhöhte Flächenpressung entlang einer Ringfläche am Kabelmantel und damit eine erhöhte Dichtheit und Zugentlastung.

Zum Herstellen einer Kabeleinführung für eine Kabelmuffe mit einem solchen eingestülpten Einsatz wird so verfahren, daß das Kabel unter Festhaltung der einen Endteilmündung auf dem Kabelmantel gegenüber dem Einsatz verschoben wird, u.zw. unter nach innen erfolgender Einstülpung dieser einen Endteilmündung; bevorzugterweise geht man dabei so vor, daß die Verschiebung des eingestülpten Endteiles so weit fortgesetzt wird, bis dieser durch den anderen Endteil hindurchgezogen worden ist.

Weitere Einzelheiten der Erfindung ergeben sich aus der folgenden Beschreibung einiger beispielhafter Ausführungsformen anhand der Zeichnung; es zeigen:

Fig. 1 eine teilweise geschnittene Draufsicht auf eine Kabelmuffe mit einem erfindungsgemäßen Einsatz,

Fig. 2 eine teilweise geschnittene Seitenansicht des Einsatzes nach Fig. 1 in vergrößerter Darstellung,

Fig. 3 eine hiezu abgeänderte Ausführung in gleicher Darstellung, und die

Fig. 4 - 6 ähnliche Ausbildungen wie nach Fig. 3, jedoch mit verschiedenartig geformten Einstülpungen, jeweils im Längsschnitt in der oberen und in Seitenansicht in der unteren Hälfte dieser Figuren.

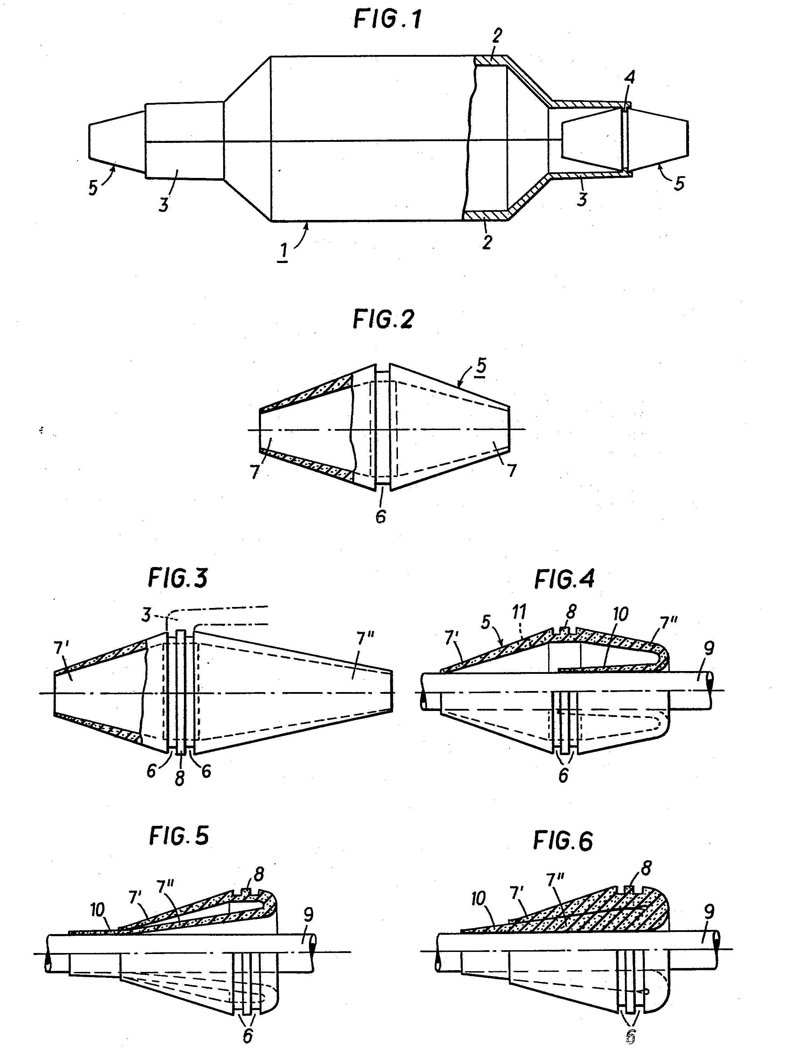

Die in Fig. 1 ersichtliche Kabelmuffe 1 besteht z. B. aus zwei entlang einer Längsmittelebene geteilten Hälften, z.B. aus Kunststoff, die in üblicher Weise miteinander verbindbar sind. In jedem Endstutzen 3 dieser Hälften 2 ist je eine nach innen vorspringende Rippe 4 ausgebildet, in der ein Kabeleinführungseinsatz 5 gelagert ist.

Wie im einzelnen in Fig. 2 dargestellt, besteht dieser Einsatz 5 aus einem Rotationskörper, der in seinem Mittelteil als Halterung in der Rippe 4 eine Nut 6 aufweist. Von dieser Nut 6 aus erstrecken sich beidseitig Endteile 7 in Form von Kegelstümpfen. Diese Endteile 7 weisen dabei eine sich kontinuierlich verjüngende Wandstärke auf. In dieser Weise bilden die Innen- und Außenflächen dieser Endteile 7 Mantelflächen eines geraden Kreiskegels, dessen Achse mit der Achse des vom Einsatz aufzunehmenden (in den Fig. 2 und 3 nicht dargestellten) Kabels zusammenfällt. Bei der Ausbildung nach Fig. 2 sind die beiden Endteile 7 etwa gleich lang; sie können in bekannter Weise durch Abschneiden dem erforderlichen Kabeldurchmesser angepaßt werden. Der Einsatz besteht aus einem elastischen, weichen Kunststoff, z.B. Polyvinylchlorid, und läßt sich durch z.B. Spritzguß einfach herstellen.

Die Ausführung nach Fig. 3 unterscheidet sich von jener nach Fig. 2 dadurch, daß hier als Halterung zwischen zwei Nuten 6 noch eine weitere Rippe 8 vorgesehen ist, die in zugeordnete zwei Rippen und eine Nut im (strichliert angedeuteten) Endstutzen 3 der Muffe 1 eingreifen, und weiterhin noch dadurch, daß der eine Endteil 7" länger, bevorzugt etwa doppelt so lang als der andere Endteil 7' ausgebildet ist.

Wie ein solcher Einsatz nach Fig. 3, bzw. in dazu leicht abgewandelter Form, besonders vorteilhaft verwendet werden kann, veranschaulichen die Fig. 4 - 6.

Nachdem, wie in Fig. 4 ersichtlich ist, das Kabel 9 durch den Einsatz hindurchgesteckt worden ist, hält man die Mündung des Endteiles 7" gegenüber dem Kabelmantel fest und übt dann einen Zug auf das Kabel 9 in Richtung auf den Endteil 7' des Einsatzes 5 aus: dadurch bildet sich eine Um- bzw. Einstülpung 10 aus, die vom Mündungsbereich des Endteiles 7" geformt wird. Diese Einstülpung 10 bewirkt eine Erhöhung der Flächenpressung des Teiles 7" über die Länge der Einstülpung 10, so daß eine verbesserte Dichtheit zwischen dem Endteil 7" bzw. seiner Einstülpung 10 erzielt wird.

Bei der Ausbildung nach Fig. 5 wird in derselben Weise vorgegangen, mit dem Unterschied, daß die Einstülpung 10 des Endteiles 7" noch weiter (in Fig. 5 nach links) gezogen worden ist, so weit nämlich, daß sie durch die Mündung des Endteiles 7' hindurchragt. Dadurch wird eine weitere Erhöhung der Dichtheit erreicht, in Verbindung mit der Erzeugung einer hohen Zugentlastung des Kabels gegenüber dem Muffeninneren.

Die Ausführung nach Fig. 6 unterscheidet sich von jener nach Fig. 5 dadurch, daß die Wandstärken in den Endteilen 7' und 7" größer gewählt sind, dergestalt, daß im Endzustand dann ein sattes Anliegen der Innenflächen der Endteile 7', 7" aneinander erreicht wird. In diesem Falle ergibt sich dabei die höchste Flächenpressung bzw. Zugentlastung.

Im Rahmen der Erfindung sind Abänderungen an den dargestellten Ausführungsbeispielen möglich. So könnte bei den Ausführungsformen nach den Fig. 2 - 4 der Raum zwischen dem Kabelmantel und der Innenfläche des Einsatzes in bekannterWeise mit einem Schaumkunststoff ausgefüllt werden; ebenso könnte dies erfolgen bei dem Hohlraum zwischen dem Endteil 7' und dem eingestülpten Endteil 7" in Fig. 5. Zum Einfüllen der Schaummischung wird diesfalls in einem Endteil, z.B. 7', eine entsprechende Öffnung, wie bei 11 in Fig. 4 strichliert angedeutet, vorgesehen.

DieMündungen der Endteile 7 und 7', 7", auch im ein-

0121644

gestülpten Zustand, können durch einen Wickel aus einem selbst verschweißenden Hochspannungsband gesichert werden, das z.B. aus schrumpfendem Äthylen-Propylen-Terpolymer (EPDM) oder Polyisobutylen besteht; in dieser Weise erhält man eine besonders wirksame Sicherung gegen ein Zurückrutschen des Kabels in die Muffe.

Durch Abschneiden der Endteile 7 bzw. 7', 7" auf den jeweils gewünschten Kabeldurchmesser kann man sich weiten Bereichen desselben anpassen.

Der erfindungsgemäße Einsatz läßt sich insbesondere sowohl bei Papierbleikabeln als auch bei Kunststoffkabeln im Telefonie-bereich anwenden.

Die Nuten bzw. Rippen der Halterung können auch einen anderen als den dargestellten Rechteckquerschnitt haben; sie könnten insbesondere auch ein Trapezprofil aufweisen.

Patentansprüche:

1. Kabeleinführungseinsatz für Kabelmuffen, der an seinen beiden Endteilen kegelstumpfähnlich ausgebildet ist und in seinem Mittelteil mit einer Halterung, z.B. mit mindestens einer Nut und bzw. oder Rippe versehen ist, dadurch gekennzeichnet, daß die Endteile (7; 7',7") des in an sich bekannter Weise aus elastischem Kunststoff, z.B. Polyvinylchlorid, bestehenden Einsatzes (5) als kegelstumpfförmige, von der Halterung (6) ausgehende Teile mit sich, bevorzugt kontinuierlich, verjüngender Wandstärke ausgebildet sind.

2. Einsatz nach Anspruch 1, dadurch gekennzeichnet, daß die Innen- und bzw. oder Außenseite der Endteile (7; 7', 7") in an sich bekannter Weise Mantelflächen eines geraden Kreiskegels sind.

3. Einsatz nach Anspruch 1 oder 2, dadurch gekennzeichnet, daß in an sich bekannter Weise der eine Endteil (7") länger, bevorzugt etwa mindestens doppelt so lang als der andere Endteil (7') ist (Fig. 3 - 6).

4. Einsatz nach einem der Ansprüche 1 - 3, dadurch gekennzeichnet, daß einer (7") der Endteile (7', 7") eine nach innen gerichtete Einstülpung (10) aufweist (Fig. 4, 5).

5. Einsatz nach Anspruch 4, dadurch gekennzeichnet, daß die Einstülpung (10) des einen Endteiles (7") innen durch den anderen Endteil (7') hindurchragt.

6. Verfahren zum Herstellen einer Kabeleinführung für eine Kabelmuffe mit einem Einsatz nach Anspruch 4 oder 5, wobei das Kabel durch die beiden Endteile hindurchgesteckt wird, dadurch gekennzeichnet, daß das Kabel unter Festhaltung der einen Endteilmündung auf dem Kabelmantel gegenüber dem Einsatz verschoben wird, u.zw. unter nach innen erfolgender Einstülpung dieser einen Endteilmündung.

7. Verfahren nach Anspruch 6, dadurch gekennzeichnet, daß die Verschiebung des eingestülpten Endteiles

0121644

so weit fortgesetzt wird, bis dieser durch den anderen Endteil hindurchgezogen worden ist.

8. Verfahren nach Anspruch 6 oder 7, dadurch gekennzeichnet, daß über die Mündung des Endteiles und den Kabelmantel ein Bandwickel aufgebracht wird, vorzugsweise aus einem selbstverschweißenden Hochspannungsband.

1/1    0121644

FIG.1

FIG.2

FIG.3

FIG.4

FIG.5

FIG.6

Europäisches
Patentamt

**EUROPÄISCHER RECHERCHENBERICHT**

0121644

Nummer der Anmeldung

EP 83 89 0052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 125 264 (PFLITSCH)<br>* Seite 4, Zeilen 6-16; Figur 4 * | 1,2 | H 02 G 15/013<br>H 02 G 15/10 |
| Y | US-A-2 800 526 (MOORHEAD)<br><br>* Spalte 2, Zeilen 18-26; Figuren 1-9 * | 1,4,5,7 | |
| Y | US-A-2 225 472 (FRANKLIN)<br>* Seite 2, linke Spalte, Zeilen 35-55; Figur 5 * | 1 | |
| A | IBM TECHNICAL DISCLOSURE BULLETIN, Band 13, Nr. 13, März 1971, Seiten 3144-3145, New York, USA<br>G. ENGEL et al.: "Seal for an electric cable" * Seite 3144, Zeilen 8-11; Figuren A,B * | 1,4 | |
| A | US-A-3 167 374 (HARVEY HUBBELL)<br>* Spalte 4, Zeile 58 - Spalte 5, Zeile 62; Figuren 5,6 * | 1,2,4 | RECHERCHIERTE SACHGEBIETE (Int. Cl. 3)<br><br>H 02 G 15/00<br>H 02 G 3/00<br>H 01 B 17/00 |
| A | GB-A- 557 328 (CRABTREE)<br>* Seite 2, Zeilen 32-41; Figuren 1,2 * | 1,2 | |
| A,D | DE-A-1 765 066 (SIEMENS)<br>* Seite 4, letzter Absatz; Seite 5, Absatz 1; Figur 3 * | 1 | |

Der vorliegende Recherchenbericht wurde für alle Patentansprüche erstellt.

| Recherchenort | Abschlußdatum der Recherche | Prüfer |
|---|---|---|
| DEN HAAG | 23-11-1983 | LOMMEL A. |